# EUROPÄISCHE PATENTANMELDUNG

(11) **EP 1 388 708 A2**
(43) Veröffentlichungstag der Anmeldung: **11.02.2004**
(21) Anmeldenummer: 03015424.9
(22) Anmeldetag: 09.07.2003
(51) Int. Cl.: F21S 19/00, A01G 9/20, F21V 21/34

(54) **Vorrichtung und Verfahren zur flexiblen Beleuchtung von Räumen**

(30) Priorität: 09.08.2002 DE 10237062
(71) Anmelder: FORSCHUNGSZENTRUM JÜLICH GMBH, 52425 Jülich (DE)
(72) Erfinder: Jahnke, Siegfried, Dr., 42551 Velbert (DE)

(57) **Zusammenfassung**

Die Erfindung betrifft eine Vorrichtung sowie ein Verfahren zur flexiblen Beleuchtung von Räumen.

Bei den nach dem Stand der Technik bekannten Vorrichtungen zur Beleuchtung von Objekten und Räumen, die neben künstlichen Lichtquellen auch das Sonnenlicht nutzen, sind die künstlichen Lichtquellen in der Regel fest installiert.
Mit der erfindungsgemäßen Vorrichtung und dem Verfahren bei dem die Leuchtmittel (4) über alle Raumebenen mittels beweglicher Laufschienen (3), auf denen die Leuchtmittel (4) befestigt sind, bewegt werden können, ist eine einfach handhabbare Anpassung der Beleuchtung auf die Beleuchtungserfordernisse möglich.

## Beschreibung

Die Erfindung betrifft eine Vorrichtung sowie ein Verfahren zur flexiblen Beleuchtung von Räumen.

Bei den nach dem Stand der Technik bekannten Vorrichtungen zur Beleuchtung von Objekten und Räumen, sind die künstlichen Leuchtmittel in der Regel fest installiert. Diese fest installierten Leuchtmittel müssen bei Änderungen des Lichtbedarfs in den Räumen aufwendig abgebaut und neu installiert werden.

Wenn neben einer künstlichen Beleuchtung auch Sonnenlicht genutzt werden soll, wird durch die fest installierten künstlichen Leuchtmittel die Beleuchtung mit Sonnenstrahlung beeinträchtigt, da ein Teil der Fläche, die belichtet werden soll, durch die künstlichen Leuchtmittel und deren Aufhängevorrichtung abgeschattet wird. Dies wirkt sich insbesondere bei den Prozessen nachteilig aus, die eine optimale Produktivität nur bei optimaler Lichtnutzung pro Fläche erreichen, wie z. B. in Gewächshäusern. In Gewächshäusern werden für die kontrollierte Pflanzenanzucht Leuchtmittel installiert, die in Zeiten geringer natürlicher Strahlung Zusatzlicht erzeugen. In Zeiten ausreichender natürlicher Strahlung erzeugen aber sowohl die Leuchtmittel selbst als auch die erforderlichen Aufhängevorrichtungen einen Schattenwurf. Dadurch kann die natürliche Strahlung nicht optimal genutzt werden, wodurch es zu erheblichen Ertragseinbußen kommen kann.

Es ist daher Aufgabe der Erfindung, eine Vorrichtung und ein Verfahren zu schaffen, mit dem eine flexible, den Lichtanforderungen angepaßte, Lichtverteilung in Räumen und von Objekten erzielt werden kann. Es ist weiterhin Aufgabe der Erfindung eine Vorrichtung und ein Verfahren zu schaffen, mit dem in Räumen, die sowohl mittels Sonnenlicht als auch mittels künstlichem Licht beleuchtet werden, flexibel auf Veränderung der Lichtbedingungen und Lichtanforderungen reagiert werden kann und eine effektive Nutzung der jeweiligen Lichtquelle erreicht werden kann.

Ausgehend vom Oberbegriff des Anspruchs 1 wird die Aufgabe erfindungsgemäß gelöst mit den im kennzeichnenden Teil des Anspruchs 1 angegebenen Merkmalen. Weiterhin wird die Aufgabe ausgehend vom Oberbegriff des Anspruchs 10 erfindungsgemäß gelöst mit den im kennzeichnenden Teil des Anspruchs 10 angegebenen Merkmalen.

Mit der erfindungsgemäßen Vorrichtung und dem Verfahren ist es nunmehr möglich, daß die Anordnung der künstlichen Leuchtmittel ohne aufwendige bauliche Veränderungen so variiert werden kann, daß sie dem jeweiligen Beleuchtungsbedarf entspricht. Durch die erfindungsgemäße Vorrichtung und das Verfahren wird es weiterhin möglich, künstliche Leuchtmittel so im Raum zu installieren, daß eine effektive Nutzung von Sonnenlicht möglich wird, ohne daß es zu Strahlungsverlusten auf Grund von Schattenbildung durch fest installierte künstliche Leuchtmittel kommt.

Vorteilhafte Weiterbildungen sind in den Unteransprüchen angegeben.

Die Zeichnungen zeigen eine beispielhafte Ausführungsform der erfindungsgemäßen Vorrichtung und des Verfahrens.

Es zeigt:
- Fig. 1:: Aufsicht der Anordnung der erfindungsgemäßen Vorrichtung unter Einsatzbedingung
- Fig. 2:: Aufsicht der Anordnung der erfindungsgemäßen Vorrichtung in Parkposition
- Fig. 3.: Seitenansicht der Anordnung der erfindungsgemäßen Vorrichtung in Parkposition
- Fig. 4:: Seitenansicht der Anordnung der erfindungsgemäßen Vorrichtung in Parkposition mit senkrecht gestapelten Leuchtmitteln
- Fig. 5:: Seitenansicht der Anordnung des Beleuchtungssystems in Parkposition mit Leuchtmitteln, die unter Pflanztischen angeordnet sind

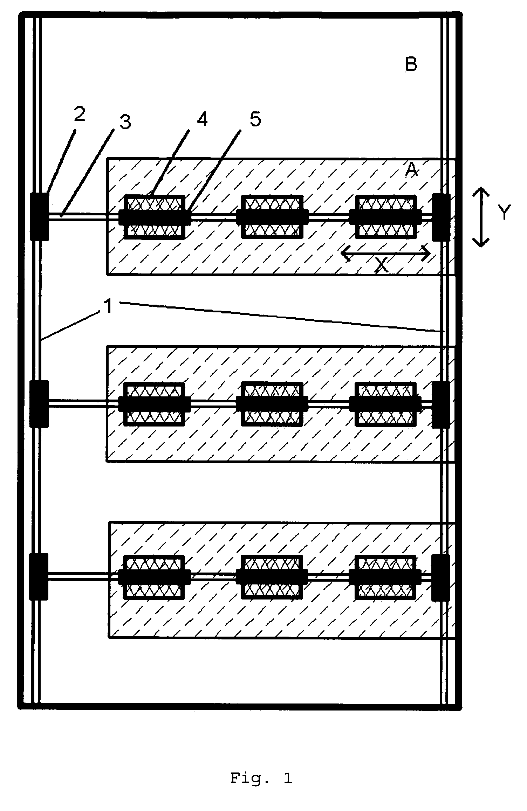

Figur 1 zeigt eine Aufsicht auf ein Gewächshaus mit Anordnung der erfindungsgemäßen Vorrichtung unter Einsatzbedingungen. Die Längs-Laufschienen 1 sind mit Längs-Antriebsmitteln 2 versehen. Die senkrecht zu den Längs-Laufschienen 1 angeordneten Quer-Laufschienen 3 sind mit Leuchtmitteln 4 versehen. Weiterhin sind die Quer-Längsschienen 3 mit Quer-Antriebsmitteln 5 versehen. Die Quer-Laufschienen 3 sind in diesem Ausführungsbeispiel über den Pflanztischen A des Gewächshauses angeordnet. Die mit B gekennzeichnete Fläche stellt die Gangfläche im Gewächshaus dar. Die Quer-Laufschienen 3 können entlang der Achse der Längs-Laufschienen 1 verschoben werden. Diese Bewegungsrichtung bzw. Y-Achse wird durch den Doppelpfeil Y gekennzeichnet. Die auf den Quer-Laufschienen 3 angebrachten Leuchtmittel 4 können entlang der Achse der Quer-Laufschienen 3 bewegt werden. Diese Bewegungsrichtung bzw. X-Achse wird durch den Doppelpfeil X gekennzeichnet.

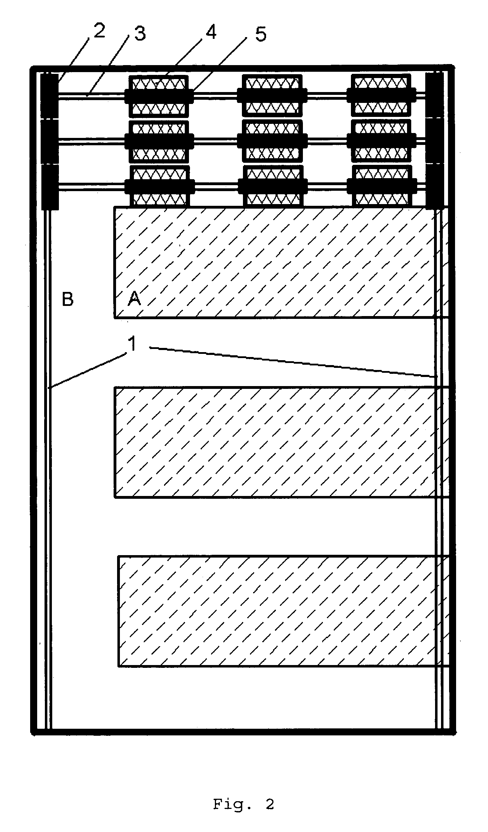

In Figur 2 ist eine Aufsicht auf ein Gewächshaus mit Anordnung der erfindungsgemäßen Vorrichtung in "Parkposition" dargestellt. Mit Hilfe der Längs-Antriebsmittel 2 werden die Quer-Laufschienen 3 mit den darauf angebrachten Leuchtmitteln 4 und den Quer-Antriebsmitteln 5 entlang der Längs-Laufschiene (Y-Achse) 1 zusammengeschoben, so daß sie nicht mehr über den Pflanztischen A sondern über der Gangfläche B angeordnet sind.

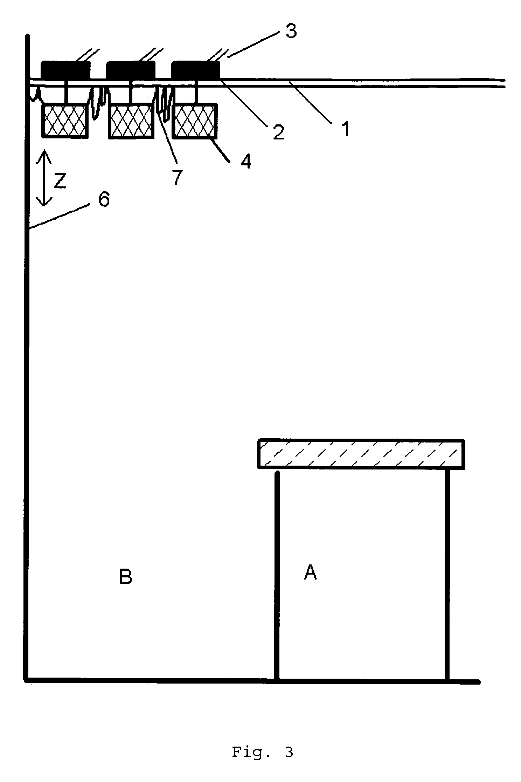

In Figur 3 ist die Seitenansicht der in Figur 2 dargestellten Anordnung der erfindungsgemäßen Vorrichtung in "Parkposition" dargestellt. Hier sind den selben Bezugszeichen die selben Vorrichtungsmerkmale zugeordnet. Die Quer-Laufschienen 3 mit den Leuchtmitteln 4 befinden sich nicht mehr über der Tischfläche A, sondern werden mit Hilfe der Längs-Antriebsmittel 2 entlang der Längs-Laufschiene 1 (Y-Achse) in den Bereich der Gangfläche B geschoben. In dieser Ansicht ist eine dritte Laufschiene 6 zu erkennen, die sich senkrecht zu der Ebene, die durch die Längs-Laufschiene 1 und Quer-Laufschienen 3 (XY-Ebene) gebildet wird, befindet. Die Laufschienen 1 und 3 können entlang der Achse dieser Laufschiene 6 nach oben und unten verschoben werden. Diese Bewegungsrichtung bzw. Z-Achse wird durch den Doppelpfeil Z gekennzeichnet. Die Längs-Antriebsmittel 2 sind untereinander über Seilzüge 7 verbunden.

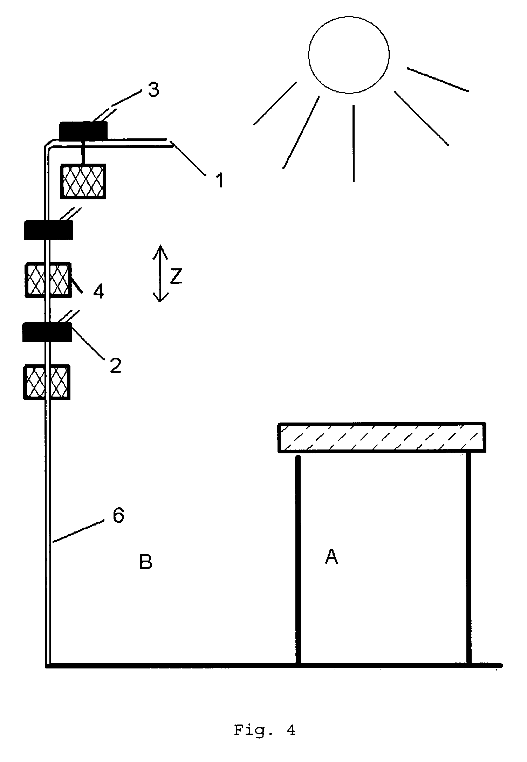

Figur 4 zeigt die Seitenansicht der Anordnung der erfindungsgemäßen Vorrichtung in "Parkposition" mit senkrecht gestapelten Leuchtmitteln 4. Hier werden die Quer-Laufschienen 3 mit den Leuchtmitteln 4 entlang der Längs-Laufschiene 1 auf die Laufschiene 6 geschoben und auf dieser senkrecht übereinander angeordnet.

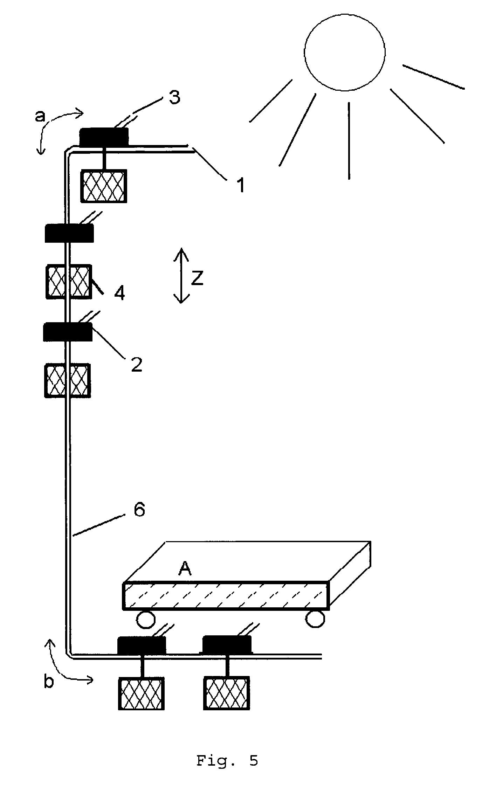

Figur 5 zeigt die Seitenansicht der Anordnung der erfindungsgemäßen Vorrichtung in "Parkposition" mit Leuchtmitteln 4, die unter Pflanztischen A angeordnet sind. Die Quer-Laufschienen 3 mit den Leuchtmitteln 4 werden entlang der Längs-Laufschiene 1 gemäß der durch den Doppelpfeil a gekennzeichneten Richtung auf die Laufschiene 6 geschoben und von dieser gemäß der durch den Doppelpfeil b gekennzeichneten Richtung auf eine Längs-Laufschiene 1 geschoben, die sich unterhalb der Pflanztische, die mit Rollen ausgestattet sind, befindet.

Die vorliegende Erfindung betrifft eine Vorrichtung zur flexiblen Beleuchtung von Räumen umfassend Laufschienen und Leuchtmittel, die dadurch gekennzeichnet ist, daß sie mindestens zwei parallel zueinander verlaufende Längs-Laufschienen 1 mit Längs-Antriebsmitteln 2 enthält, sowie mindestens eine Quer-Laufschiene 3 aufweist, die beide Längs-Laufschienen 1 miteinander verbindet und entlang der Längs-Laufschienen 1 mittels der Längs-Antriebsmittel 2 verschiebbar ist, wobei die Quer-Laufschiene 3 mit Leuchtmitteln 4 und Quer-Antriebsmitteln 5 zur Bewegung der Leuchtmittel 4 entlang der Quer-Laufschiene 3 bestückt ist. Die Quer-Laufschienen 3 sind in einer vorteilhaften Ausführung der Vorrichtung senkrecht zu den Längs-Laufschienen 1 angeordnet. Eine rautenförmige Gitterkonstruktion, bei der die Quer-Laufschienen nicht im rechten Winkel zu den Längs-Laufschienen 1 angeordnet sind, ist jedoch ebenfalls möglich.
Mit der erfindungsgemäßen Vorrichtung kann eine flexibel regelbare Beleuchtung von Räumen und von Objekten ermöglicht werden. Die Leuchtmittel 4 können auf Grund der variablen Befestigung an mobilen Laufschienen je nach Bedarf an die gewünschte Position, in der eine Beleuchtung gewünscht wird, bewegt werden. Gleichzeitig können sie aber auch aus einer Position, in der die Leuchtmittel eine Strahlungsbeeinträchtigung (Abschattung des Sonnenlichts) bewirken oder eine Fläche des Raumes durch die Leuchtmittel unzugänglich wird, entfernt werden. Eine aufwendige Demontage und Neuinstallation, die bei fest installierten Leuchtmitteln erforderlich wäre, entfällt. Unter der Bezeichnung Leuchtmittel soll im Rahmen der vorliegenden Erfindung sowohl die Leuchte, wie beispielsweise die Glühlampe oder Halogenlampe, als auch die Aufhängevorrichtung, wie beispielsweise die Lampenfassung oder der Lampenschirm, umfaßt sein. Die Leuchtmittel können sowohl entlang der Längs-Laufschiene 1 als auch entlang der Quer-Laufschienen 3 bewegt werden. Die Bewegung der Leuchtmittel 4 entlang der Längs-Laufschiene 1 wird durch Verschieben der Quer-Laufschiene 3, auf der die Leuchtmittel 4 befestigt sind, durch die Längs-Antriebsmittel 2 der Längs-Laufschiene 1 ermöglicht. Das Verschieben der Leuchtmittel 4 entlang der Quer-Laufschiene 3 wird mit Hilfe der Quer-Antriebsmittel 5 durchgeführt. Die Position der Leuchtmittel 4 kann also innerhalb der XY-Ebene, die durch die Längs-Laufschienen 1 und die Quer-Laufschienen 3 gebildet wird, frei variiert werden. Je nach Bedarf kann die Anzahl der Längs-Laufschienen 1 und der Quer-Laufschienen 3 abgewandelt werden. Die Anzahl der Längs-Laufschienen 1 sollte mindestens zwei und die der Quer-Laufschienen 3 mindestens eine betragen, um eine stabile Aufhängung der Leuchtmittel 4 zu gewährleisten. Es ist jedoch auch möglich, die Anzahl der Laufschienen zu erweitern und z. B. 2-10 Längs-Laufschienen 1 mit 2-20 Quer-Laufschienen 3 einzubauen. Die Anzahl der Laufschienen ist u.a. abhängig von der erforderlichen Leuchtendichte und der Raumgröße. Mit Hilfe der Längs-Laufschienen 1 und der Quer-Laufschienen 3 kann eine Gitterkonstruktion geschaffen werden, innerhalb der die erforderliche Anzahl an Leuchtmitteln 4 flexibel je nach Bedarf mit Hilfe der verschiebbaren Quer-Laufschienen 3 und der verschiebbaren Leuchtmittel 4 positioniert werden kann. Kommt es beispielsweise in einem Raum, der durch natürliches Sonnenlicht beleuchtet wird (z. B. Gewächshaus), zu einer Verringerung der gewünschten oder erforderlichen Lichteinstrahlung, so können die künstlichen Leuchtmittel dies ausgleichen, indem sie genau in die Bereiche bewegt werden, wo das Sonnenlicht nicht ausreicht. Wenn die natürliche Sonneneinstrahlung dann wieder zunimmt und damit die gewünschte Lichteinstrahlung durch die zusätzlichen Leuchtmittel überschritten wird, können diese Leuchtmittel wieder aus dem "überbelichteten" Bereich in eine "Parkposition" (s. Fig. 2 bis 5) geschoben werden, so daß sie die natürliche Sonneneinstrahlung nicht mehr beeinträchtigen. So wird gleichzeitig eine Abschattung des Sonnenlichts durch die Leuchtmittel und deren Aufhängungen verhindert und eine energiewirtschaftlich günstige Ausnutzung sowohl des Sonnenlichts als auch der künstlichen Leuchtmittel erreicht. Die erfindungsgemäße Vorrichtung ist bevorzugt für die Beleuchtung in Gewächshäusern geeignet. Sie kann jedoch auch für die Beleuchtung von beispielsweise Einkaufshallen oder Produktionshallen, deren Räume neben künstlichen Leuchtmitteln mit Sonnenlicht beleuchtet werden, vorteilhaft sein. In Räumen, die nur mittels künstlicher Leuchtmittel beleuchtet werden, wie z. B. Produktionshallen oder Museen, kann die erfindungsgemäße Vorrichtung dazu genutzt werden, die Beleuchtung variabel je nach dem aktuellen Bedarf zu gestalten. Dies kann zu einer Einsparung von Leuchtmitteln führen und zum anderen kann eine optimale Beleuchtung des Raums zunächst experimentell ermittelt werden.

In einer vorteilhaften Ausgestaltung umfaßt diese Vorrichtung Antriebsmittel und/oder Laufschienen 6, welche bzw. mit denen die Leuchtmittel 4 senkrecht zur XY-Ebene, die durch die Längs-Laufschienen 1 und die Quer-Laufschienen 3 aufgespannt wird, bewegt werden. Zu diesen Antriebsmitteln zählen beispielsweise Seilzüge, welche die Leuchtmittel 4 nach unten oder oben bewegen. Weiterhin können die Leuchtmittel 4 auch entlang der Laufschienen 6 (s. Fig.3) senkrecht zur XY-Ebene, die durch die Längs-Laufschienen 1 und die Quer-Laufschiene 3 gebildet wird, nach oben oder unten verschoben werden. Die Leuchtmittel können daher innerhalb der durch die XYZ-Achsen gebildeten Raumebenen frei wählbar positioniert werden. Weiterhin können die Leuchtmittel 4 besonders platzsparend senkrecht übereinander auf der Laufschiene 6 angeordnet werden. In der Pflanzenzucht werden die Leuchtmittel 4 häufig mit reflektierendem Material versehen, um eine Nutzung des Streulichtes zu erreichen. Auch dieses Reflexionsmaterial (z. B. Schattiergewebe aus Aluminiumfäden) kann dann zusammen mit den Leuchtmitteln verschoben werden. Das Reflexionsgewebe wird bei Verschieben der Leuchtmittel 4 in die "Parkposition" zusammengezogen und bei Einsatz der Leuchtmittel 4 wieder über der zu beleuchtenden Fläche durch Auseinanderziehen der Leuchtmittel 4 aufgespannt.

Eine vorteilhafte Ausführung der Vorrichtung umfaßt Antriebsmittel, die über Lichtsensoren gesteuert sind. Dies ermöglicht es, definierte und konstante Beleuchtungsbedingungen über die wählbare Positionierung der Leuchtmittel 4 in einem Raum oder von Objekten direkt und automatisiert einzustellen. Wird von den Lichtsensoren beispielsweise in einem Raum, der überwiegend durch natürliches Sonnenlicht beleuchtet wird, eine Verringerung der gewünschten oder erforderlichen Lichteinstrahlung detektiert, so können die künstlichen Leuchtmittel dies ausgleichen, indem sie genau in den Bereich verschoben werden, wo das Sonnenlicht nicht ausreicht. Wenn die natürliche Sonneneinstrahlung dann wieder zunimmt und die Lichtsensoren eine Überschreitung der gewünschten Lichteinstrahlung detektieren, können die Leuchtmittel wieder aus dem "überbelichteten" Bereich in die "Parkposition" (s. Fig.2 und 3) geschoben werden. Für die elektrische Steuerung der Antriebsmittel sind die erforderlichen Stromkabel so aufzuhängen, daß sie mit den Antriebsmitteln mitgeführt werden können.

In einer weiteren vorteilhaften Ausgestaltung der erfindungsgemäßen Vorrichtung sind an den Verbindungspunkten der Quer-Laufschienen 3 mit den Längs-Laufschienen 1 jeweils Längs-Antriebsmittel 2 angebracht, so daß jede Quer-Laufschiene 3 individuell oder zusammen mit weiteren Quer-Laufschienen entlang der Längs-Laufschienen 1 verschoben werden kann. Als Antriebsmittel kann die Vorrichtung beispielsweise Rollwagen, Seilwinden, Seil- oder Kettenzüge oder elektrisch betriebene Antriebsmotoren umfassen. Der besondere Vorteil der Seil- oder Kettenzüge liegt darin, daß diese Antriebsmittel technisch einfach umgesetzt werden können und keine oder nur eine geringe zusätzliche Energie verbrauchen. Die Antriebsmittel wie z. B. Rollwagen können über umlaufende Seilzüge miteinander verbunden werden und mittels eines gemeinsamen Motors angetrieben werden. Dabei kann es ausreichend sein, nur den vordersten Rollwagen auf einer Laufschiene mit einem Antrieb zu versehen und die restlichen Rollwagen mit flexiblen Abstandhaltern (z. B. Ketten) miteinander zu verbinden.

Die Quer-Laufschienen 3 sind mit mindestens einem Leuchtmittel 4 ausgestattet. Je nach Licht-Bedarf und Lichtintensität der Leuchtmittel können jedoch beliebig viele Leuchtmittel auf den Quer-Laufschienen 3 befestigt sein. In der Gewächshaustechnik wird üblicherweise ein Leuchtmittel mit einer Leistung von ca. 400 W eingesetzt, so daß sich auf der zu belichtenden Fläche eine Lichtintensität von ca. 40 W pro m² einstellt. Als Leuchtmittel kann die Vorrichtung je nach Anwendung alle handelsüblichen Lampen wie beispielsweise Glühlampen, Quecksilberdampflampen, Halogenlampen, spezielle Pflanzenlichtlampen oder auch Neonlampen umfassen.

Die Laufschienen können in einer vorteilhaften Ausführung der erfindungsgemäßen Vorrichtung als Stromschienen ausgestaltet sein. Die Stromversorgung der Leuchtmittel 4 auf den beweglichen Quer-Laufschienen 3 und gegebenenfalls der Längs-Antriebsmittel 2, die andernfalls mit Stromkabeln erfolgt, wird dadurch vereinfacht.

In einer bevorzugten Ausführung der erfindungsgemäßen Vorrichtung bestehen die Laufschienen aus Aluminium, Edelstahl oder anderem statisch stabilem Material. Dies gewährleistet eine stabile Befestigung der Leuchtmittel auf den Laufschienen sowie eine gleichmäßige und einwandfreie Funktion der Antriebsmittel der Laufschienen.

Gegenstand der vorliegenden Erfindung ist weiterhin ein Verfahren zur flexiblen Beleuchtung von Räumen unter Verwendung von Laufschienen und Leuchtmitteln, welches dadurch gekennzeichnet ist, daß
- mindestens zwei parallel zueinander verlaufende Längs-Laufschienen (1) mit Längs-Antriebsmitteln (2) eingesetzt werden, sowie
- mindestens eine Quer-Laufschiene (3) eingesetzt wird, welche die Längs-Laufschienen (1) miteinander verbindet und entlang der Längs-Laufschienen (1) mittels der Längs-Antriebsmittel (2) verschoben werden kann, wobei
- die Quer-Laufschiene (3) mit Leuchtmitteln (4) und Quer-Antriebsmitteln (5) zur Bewegung der Leuchtmittel (4) entlang der Quer-Laufschiene (3) ausgestattet wird.

Durch das erfindungsgemäße Verfahren kann eine nutzungsabhängige Positionierung von Leuchtmitteln in Räumen durchgeführt werden. Die Leuchtmittel 4 können auf Grund der variablen Befestigung auf mobilen Laufschienen je nach Bedarf an die gewünschte Position bewegt werden. Die Leuchtmittel 4 können sowohl entlang der Längs-Laufschienen 1 als auch entlang der Quer-Laufschienen 3 bewegt werden. Die Bewegung der Leuchtmittel 4 entlang der Längs-Laufschiene 1 wird durch Verschieben der Quer-Laufschiene 3, auf der die Leuchtmittel 4 befestigt sind, durch die Längs-Antriebsmittel 2 der Längs-Laufschiene 1 ermöglicht. Das Verschieben der Leuchtmittel 4 entlang der Quer-Laufschiene 3 wird mit Hilfe der Quer-Antriebsmittel 5 durchgeführt. Die Position der Leuchtmittel 4 kann also innerhalb der XY-Ebene, die durch die Längs-Laufschienen 1 und die Quer-Laufschienen 3 gebildet wird, frei variiert und in die Position bewegt werden, in der die Beleuchtung erforderlich ist. In einer weiteren bevorzugten Ausführung des Verfahrens können die Leuchtmittel 4, beispielsweise mit Hilfe von Seilzügen oder einer weiteren Laufschiene 6, senkrecht zur XY-Ebene nach oben oder unten verschoben werden. Dadurch wird es möglich die Leuchtmittel dreidimensional im Raum beliebig zu positionieren.

In einer vorteilhaften Ausführung des Verfahrens werden die Leuchtmittel 4 bei Nutzung der Solarstrahlung mit Hilfe der Längs-Laufschienen 1 und/oder der Quer-Laufschienen 3 so positioniert, daß sie in einem Bereich angeordnet werden, der nicht durch die Solarstrahlung beleuchtet wird (= "Parkposition"). Diese Ausführungsform ist besonders bei lichtabhängigen Produktionsprozessen von Vorteil, die auf eine hohe flächenspezifische Produktivität angewiesen sind, wie z. B. die Pflanzenzucht in Gewächshäusern. Hier ist es besonders wichtig, daß sowohl das künstliche Licht als auch das natürliche Sonnenlicht effektiv zur Produktion von Pflanzen umgesetzt wird und eine effektive Nutzung der zur Verfügung stehenden Fläche erfolgt. Bei der Nutzung der Solarstrahlung werden die Leuchtmittel so verschoben, daß sie die natürliche Strahlung durch Abschattung nicht beeinträchtigen. Sie werden in eine "Parkposition" verschoben (s. Fig. 2 bis 5) d.h. in einen Bereich des Raumes, der nicht von natürlicher Sonnenstrahlung beleuchtet und nicht zur Aufstellung von Pflanztischen A genutzt wird. Dies kann beispielsweise die Nordseite oder der Nordgiebel eines Gewächshauses sein. Die Quer-Laufschienen 3 mit den Leuchtmitteln 4 können in einer weiteren vorteilhaften Ausführung des Verfahrens auf einer Laufschiene 6 senkrecht übereinander angeordnet werden (s. Fig.4). Hierdurch wird eine besonders platzsparende "Parkposition" ermöglicht. In einer besonders vorteilhaften Ausführung des erfindungsgemäßen Verfahrens werden die Quer-Laufschienen 3 mit den darauf befestigten Leuchtmitteln 4 unter die Fläche geschoben, die von der Solarstrahlung beleuchtet wird, wie z. B. die Pflanztische A (s. Fig. 5). Dadurch muß keine zusätzliche Fläche für die "Parkposition" der Leuchtmittel 4 zur Verfügung gestellt werden und kann ausschließlich als Produktionsfläche genutzt werden. Statt dessen kann die sonst ungenutzte Fläche unter den Pflanztischen A, die ebenfalls durch Ausstattung mit Rollen mobil ausgestaltet sein können, sinnvoll für das "Parken" der Leuchtmittel 4 genutzt werden.

In einer bevorzugten Ausführung des Verfahrens werden die Antriebsmittel über Lichtsensoren gesteuert. Dadurch wird es möglich, definierte und automatisch regelbare Beleuchtungsbedingungen einzustellen und auf natürliche Lichtschwankungen direkt reagieren zu können.

Durch die vorteilhafte Verwendung eines Antriebsmittels pro Leuchtmittel und eines Antriebsmittels pro Verbindungspunkt der Quer-Laufschiene 3 mit den Längs-Laufschienen 1 können die Leuchtmittel 4 sowohl einzeln als auch in Gruppen je nach Bedarf bewegt werden. Als Antriebsmittel hat sich der Einsatz von Rollwagen, Seil/Kettenzügen, Seilwinden und/oder elektrischen Antriebsmotoren als geeignet erwiesen.

Bei einer vorteilhaften Ausführung des Verfahrens werden Quer-Laufschienen mit ≥ 1 Leuchtmittel 4 eingesetzt. In der Pflanzenzucht hat sich beispielsweise der Einsatz von einem Leuchtmittel mit einer Leistung von 400 W als geeignet erwiesen. Als Leuchtmittel können beispielsweise Glühlampen, Quecksilberdampflampen, Halogenlampen, Pflanzenlichtlampen oder Neonlampen eingesetzt werden.

In einer vorteilhaften Ausführung des Verfahrens werden Laufschienen eingesetzt, die gleichzeitig als Stromschienen ausgelegt sind. Die Stromversorgung der Leuchtmittel und gegebenenfalls der Antriebsmittel kann dadurch vereinfacht werden. Es sollten in einer vorteilhaften Ausführung des Verfahrens Laufschienen aus Aluminium, Edelstahl oder anderem statisch stabilem Material eingesetzt werden, die eine stabile Befestigung der Leuchtmittel und eine einwandfreie Bewegung der Antriebsmittel gewährleisten.

## Patentansprüche

1. Vorrichtung zur flexiblen Beleuchtung von Räumen, umfassend Laufschienen und Leuchtmittel,
**dadurch gekennzeichnet,**
**daß** sie
- mindestens zwei parallel zueinander verlaufende Längs-Laufschienen (1) mit Längs-Antriebsmitteln (2) enthält, sowie
- mindestens eine Quer-Laufschiene (3) aufweist, welche die Längs-Laufschienen (1) miteinander verbindet und entlang der Längs-Laufschienen (1) mittels der Längs-Antriebsmittel (2) verschiebbar ist, wobei
- die Quer-Laufschiene (3) mit Leuchtmitteln (4) und Quer-Antriebsmitteln (5) zur Bewegung der Leuchtmittel (4) entlang der Quer-Laufschiene (3) bestückt ist.

2. Vorrichtung nach Anspruch 1
**gekennzeichnet durch**,
Antriebsmittel und /oder Laufschienen (6), zur Bewegung der Leuchtmittel (4) senkrecht zur XY-Ebene, die **durch** die Längs-Laufschiene (1) sowie **durch** die Quer-Laufschiene (3) gebildet wird.

3. Vorrichtung nach einem der Ansprüche 1 bis 2,
**dadurch gekennzeichnet,**
**daß** sie Längs- (2) und/oder Quer-Antriebsmittel (5) enthält, die über Lichtsensoren gesteuert sind.

4. Vorrichtung nach einem der Ansprüche 1 bis 3,
**dadurch gekennzeichnet,**
**daß** die Anzahl der Längs-Antriebsmittel (2) mindestens der Anzahl der Verbindungspunkte der Quer-Laufschienen (3) mit den Längs-Laufschienen (1) entspricht.

5. Vorrichtung nach einem der Ansprüche 1 bis 4,
**dadurch gekennzeichnet,**
**daß** die Längs-Antriebsmittel (2) und/oder Quer-Antriebsmittel (5) Rollwagen, Seilzüge oder elektrische Antriebsmotoren umfassen.

6. Vorrichtung nach einem der Ansprüche 1 bis 5,
**dadurch gekennzeichnet,**
**daß** die Quer-Laufschiene (3) ≥ 1 Leuchtmittel enthält.

7. Vorrichtung nach einem der Ansprüche 1 bis 6,
**gekennzeichnet durch**,
Halogenlampen, Glühlampen, Quecksilberdampflampen, Pflanzenlichtlampen oder Neonlampen als Leuchtmittel (4).

8. Vorrichtung nach einem der Ansprüche 1 bis 7,
**dadurch gekennzeichnet,**
**daß** die Längs- (1) und/oder Quer-Laufschienen (3) als Stromschienen ausgestaltet sind.

9. Vorrichtung nach einem der Ansprüche 1 bis 8,
**gekennzeichnet durch**,
Längs-Laufschienen (1) und/oder Quer-Laufschienen (3) aus Aluminium, Edelstahl oder anderem statisch stabilem Material.

10. Verfahren zur flexiblen Beleuchtung von Räumen unter Verwendung von Laufschienen und Leuchtmitteln,
**dadurch gekennzeichnet,**
**daß**
- mindestens zwei parallel zueinander verlaufende Längs-Laufschienen (1) mit Längs-Antriebsmitteln (2) eingesetzt werden, sowie
- mindestens eine Quer-Laufschiene (3) eingesetzt wird, welche die Längs-Laufschienen (1) miteinander verbindet und entlang der Längs-Laufschienen (1) mittels der Längs-Antriebsmittel (2) verschoben werden kann, wobei
- die Quer-Laufschiene (3) mit Leuchtmitteln (4) und Quer-Antriebsmitteln (5) zur Bewegung der Leuchtmittel (4) entlang der Quer-Laufschiene (3) ausgestattet wird.

11. Verfahren nach Anspruch 10
**dadurch gekennzeichnet,**
**daß** die Leuchtmittel (4) mit Hilfe der Längs-Laufschienen (1) und/oder der Quer-Laufschienen (3) jeweils in die Position bewegt werden, in der die Beleuchtung erforderlich ist.

12. Verfahren nach einem der Ansprüche 10 bis 11,
**dadurch gekennzeichnet,**
**daß** bei Nutzung der Solarstrahlung die Leuchtmittel (4) mit Hilfe der Längs-Laufschienen (1) und/oder der Quer-Laufschienen (3) so positioniert werden, daß sie in einem Bereich angeordnet werden, der nicht durch die Solarstrahlung beleuchtet wird.

13. Verfahren nach einem der Ansprüche 10 bis 12,
**dadurch gekennzeichnet,**
**daß** die Quer-Laufschienen (3) mit den Leuchtmitteln (4) senkrecht übereinander auf einer Laufschiene (6) angeordnet werden.

14. Verfahren nach einem der Ansprüche 10 bis 13,
**dadurch gekennzeichnet,**
**daß** die Quer-Laufschienen (3) mit den Leuchtmitteln (4) unter der Fläche, die durch Solarstrahlung beleuchtet wird, angeordnet werden.

15. Verfahren nach einem der Ansprüche 10 bis 14,
**dadurch gekennzeichnet,**
**daß** Antriebsmittel und/oder Laufschienen (6) eingesetzt werden, mit denen die Leuchtmittel (4) senkrecht zur XY-Ebene, die durch die Längs-Laufschiene (1) sowie durch die Quer-Laufschiene (3) gebildet wird, bewegt werden.

16. Verfahren nach einem der Ansprüche 10 bis 15,
**dadurch gekennzeichnet,**
**daß** die Längs-Antriebsmittel (2) und/oder die Quer-Antriebsmittel (5) über Lichtsensoren gesteuert werden.

17. Verfahren nach einem der Ansprüche 10 bis 16,
**dadurch gekennzeichnet,**
**daß** mindestens so viele Längs-Antriebsmittel (2) wie Verbindungspunkte der Quer-Laufschienen (3) mit den Längs-Laufschienen (1) eingesetzt werden.

18. Verfahren nach einem der Ansprüche 10 bis 17,
**dadurch gekennzeichnet,**
**daß** als Längs-Antriebsmittel (2) und/oder Quer-Antriebsmittel (5) Rollwagen, Seilzüge und/oder elektrische Antriebsmotoren eingesetzt werden.

19. Verfahren nach einem der Ansprüche 10 bis 18,
**dadurch gekennzeichnet,**
**daß** Quer-Laufschienen (3) mit ≥ 1 Leuchtmittel (4) eingesetzt werden.

20. Verfahren nach einem der Ansprüche 10 bis 19,
**dadurch gekennzeichnet,**
**daß** als Leuchtmittel (4) Glühlampen, Quecksilberdampflampen, Halogenlampen, Pflanzenlichtlampen oder Neonlampen eingesetzt werden.

21. Verfahren nach einem der Ansprüche 10 bis 20,
**dadurch gekennzeichnet,**
**daß** die Längs-Laufschiene (1) und/oder die Quer-Laufschiene (3) gleichzeitig als Stromschienen eingesetzt werden.

22. Verfahren nach einem der Ansprüche 10 bis 21,
**dadurch gekennzeichnet,**
**daß** Längs-Laufschienen (1) und /oder Quer-Laufschienen (3) aus Aluminium, Edelstahl oder anderem statisch stabilem Material eingesetzt werden.
